# FASCICULE DE BREVET EUROPEEN

(11) **EP 0 778 425 B1**
(45) Date de publication et mention de la délivrance du brevet: **28.02.2001**
(21) Numéro de dépôt: 96119465.1
(22) Date de dépôt: 04.12.1996
(51) Int. Cl.: F16D 25/08, F16D 25/12, F15B 7/08, B60T 11/16

(54) **Dispositif perfectionné de commande hydraulique d'un embrayage de véhicule automobile**
Verbesserte hydraulische Kupplungsbetätigungsvorrichtung für Kraftfahrzeuge
Improved hydraulic clutch actuator for a motor vehicle

(30) Priorité: 05.12.1995 FR 9514368
(43) Date de publication de la demande: 11.06.1997
(73) Titulaire: VALEO, 75017 Paris (FR)
(72) Inventeur: Rey, Frédéric, 95210 Saint-Gratien (FR)
(74) Mandataire: Gamonal, Didier

(56) Documents cités:
- EP-A- 0 345 451
- WO-A-87/03344
- DE-A- 1 961 079
- DE-A- 3 816 608
- DE-A- 3 910 691
- DE-A- 4 313 346
- FR-A- 2 539 195

## Description

L'invention concerne un dispositif perfectionné de commande hydraulique d'un embrayage de véhicule automobile dans lequel un cylindre émetteur, ou récepteur, comporte un tube arrière de guidage emboîté axialement dans un corps principal du cylindre.

L'invention concerne plus particulièrement un dispositif de commande hydraulique d'un embrayage de véhicule automobile, du type comportant au moins un cylindre de commande, du type dans lequel le cylindre comporte un corps de cylindre sensiblement tubulaire dans lequel coulisse axialement un piston qui délimite, par une face transversale avant, une chambre hydraulique cylindrique et qui coopère, par une face arrière, avec une tige de piston, du type dans lequel un orifice de raccordement d'une canalisation débouche dans la chambre hydraulique, du type dans lequel le corps de cylindre est réalisé en deux parties en matériau plastique qui comprennent un corps principal et un tube arrière de guidage qui est rapporté dans une partie arrière du corps principal et qui participe au guidage du piston dans le cylindre.

Un tel type de cylindre est connu et a notamment été décrit et représenté dans la demande de brevet européen EP-A-0 345 451.

Dans ce document, le tube arrière et le corps principal sont réalisés en matière plastique et ils sont munis chacun d'un filetage de manière à pouvoir assembler le tube arrière par vissage dans le corps principal.

Ce type d'assemblage présente l'inconvénient d'être délicat à réaliser et relativement fragile, étant donné qu'il s'agit de pièces en matière plastique.

De plus, l'assemblage par vissage nécessite qu'il existe entre le tube arrière et le corps principal un jeu radial suffisant pour permettre le vissage et pour compenser les éventuels défauts de forme du filetage.

De la sorte, on ne peut garantir l'obtention d'une coaxialité parfaite entre le tube arrière et le corps principal, ce qui est pourtant nécessaire pour garantir un bon coulissement du piston dans le cylindre.

De plus, il est alors nécessaire de prévoir un joint annulaire entre le tube arrière et le corps principal pour garantir une bonne étanchéité de l'assemblage.

Dans le but d'apporter une solution à ces problèmes, le document DE-A-3.816.608 conforme au préambule de la revendication 1, propose un dispositif du type décrit précédemment, dans lequel le tube arrière et le corps principal coopèrent par des surfaces cylindriques complémentaires pour permettre un assemblage par emboîtement axial du tube arrière dans le corps principal.

Dans ce document, le maintien de l'assemblage est réalisé grâce notamment à un ressort intervenant en la tige de piston et une tôle en appui sur le tube arrière.

La présente invention a pour objet d'éviter ce mainien à l'aide d'un ressort.

Conformément à l'invention, ce problème est résolu par la partie caractérisante de la revendication 1.

Selon d'autres caractéristiques de l'invention :
- le tube arrière est en butée axiale contre une face transversale du corps principal ;
- l'assemblage du tube arrière dans le corps principal est réalisé par soudage ou par collage est étanche ;
- le tube arrière comporte, à son extrémité axiale arrière, un collet radial externe dont une face transversale avant s'étend en regard d'une race transversale de l'extrémité axiale arrière du corps principal ;
- le collage ou le soudage est effectué au moins en partie entre les faces en regard du collet radial du tube arrière et de l'extrémité axiale arrière du corps principal ;
- le collage ou le soudage est effectué au moins en partie entre les deux surfaces cylindriques complémentaires du tube arrière et du corps principal ;
- le tube arrière porte au moins un joint annulaire qui coopère avec le piston pour assurer l'étanchéité de la chambre hydraulique ; et
- le corps de cylindre est réalisé en matière plastique et le piston est réalisé en métal.

D'autres caractéristiques et avantages de l'invention apparaîtront à la lecture de la description détaillée qui suit pour la compréhension de laquelle on se reportera aux dessins annexés dans lesquels :
- les figures 1 et 2 sont des vues en coupe axiale d'un cylindre récepteur conforme aux enseignements de l'invention, dans lequel le piston est représenté respectivement dans une première position avancée et dans une seconde position reculée ;

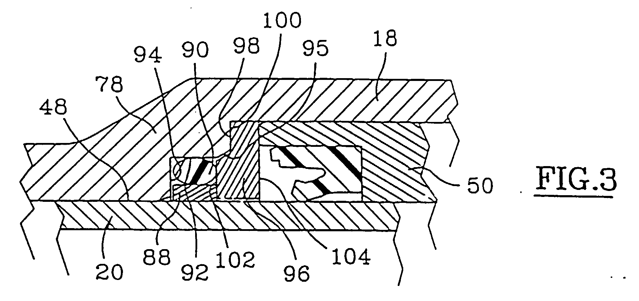

- la figure 3 représente un détail agrandi de la figure 1 ;

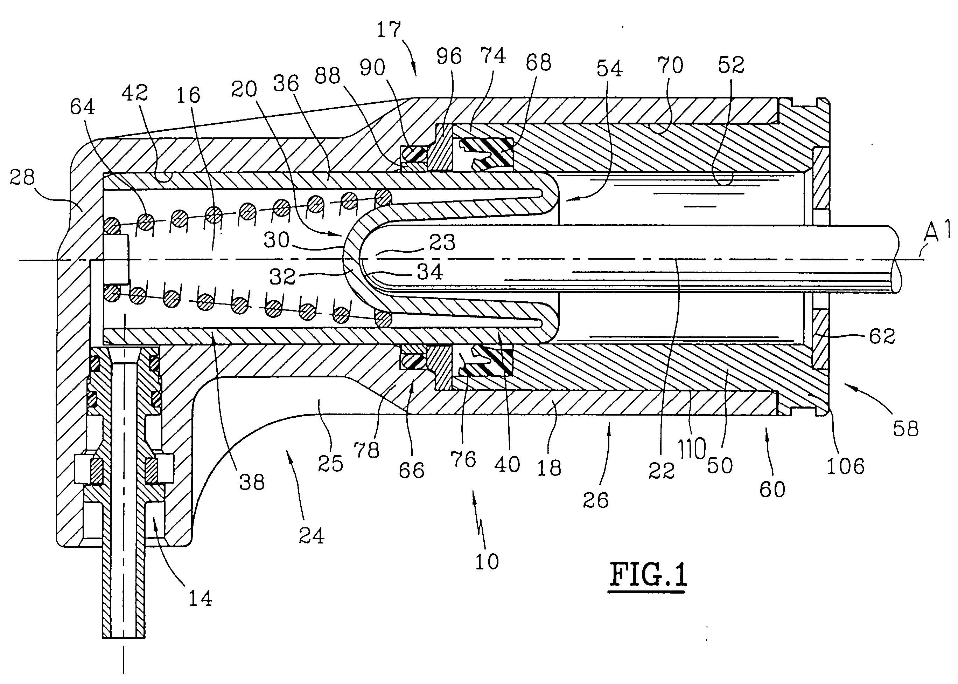

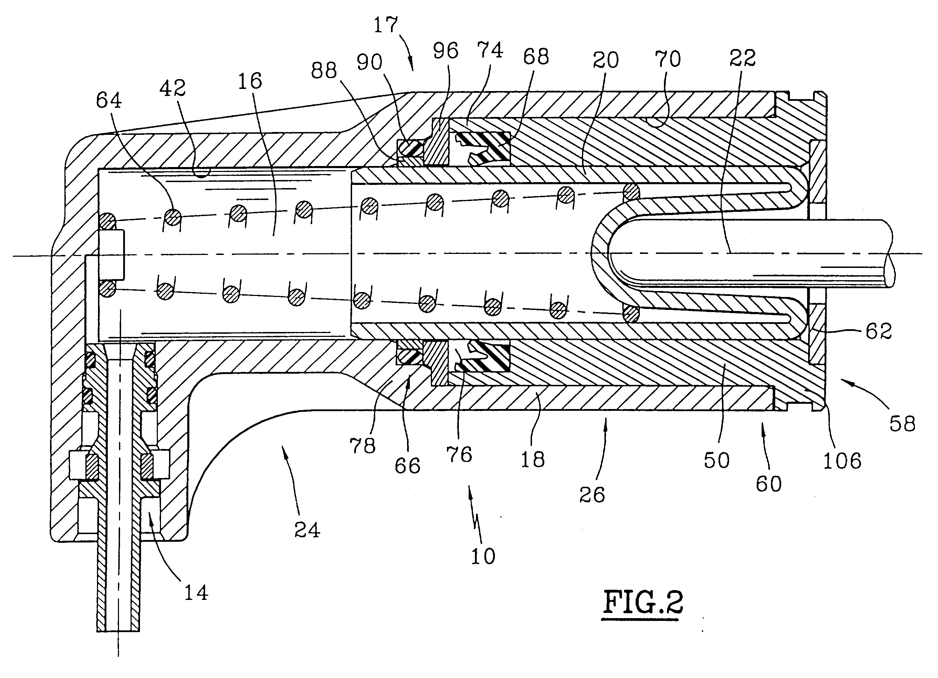

On a représenté sur les figures 1 et 2 un cylindre récepteur 10 d'un dispositif de commande hydraulique d'un embrayage de véhicule automobile.

Un tel dispositif (non représenté) comporte essentiellement un cylindre émetteur, de structure similaire au cylindre récepteur ici représenté, et dont un piston se déplace sous l'action d'une tige de commande reliée par exemple à une pédale d'embrayage sur laquelle agit le conducteur. Le piston du cylindre émetteur est destiné à expulser un fluide, tel que de l'huile, contenu dans une chambre hydraulique en direction d'une canalisation 12 qui relie le cylindre émetteur au cylindre récepteur 10.

La canalisation 12 débouche par un orifice d'entrée 14 à l'intérieur d'une chambre hydraulique 16 à volume variable délimitée dans un corps de cylindre 17 en matière plastique du cylindre récepteur 10 pour provoquer le déplacement d'un piston 20 qui, par l'intermédiaire d'une tige de commande 22, agit par exemple sur une fourchette de commande d'un embrayage (non représentée) pour provoquer le débrayage.

Le corps de cylindre 17 comporte un corps principal 18 en matière plastique qui présente une forme de tube étagé d'axe A1 et qui comporte une partie avant 24 de diamètre réduit par rapport à une partie arrière 26. Le diamètre interne de la partie avant 24 est donc inférieur au diamètre interne de la partie arrière 26.

Afin de rigidifier le corps de cylindre 17, il est prévu, tout autour de la partie avant 24 du corps principal 18, des nervures de rigidification 25. Le corps 18 est fermé vers l'avant et ouvert vers l'arrière.

Plus précisément la chambre hydraulique 16 est délimitée dans la partie avant 24 du corps de cylindre 17 et elle est délimitée axialement, à l'avant, par une paroi transversale avant 28 dans laquelle est formé l'orifice d'entrée 14, et, à l'arrière, par une face transversale avant 30 du piston 20.

On peut prévoir de munir la chambre hydraulique de rainures axiales (non représentées) qui sont par exemple réalisées venues de matière par moulage avec le corps principal 18 et qui sont agencées angulairement en correspondance avec les nervures de rigidification 25. Les rainures permettent notamment de garantir une meilleure répartition de la pression de contact entre le piston 20 et le corps principal 18 et permettent également d'éviter qu'il n'y ait des surépaisseurs de matière dans le corps principal 18 au niveau des nervures 25, ce qui est particulièrement intéressant pour une pièce réalisée par moulage.

Par ailleurs, l'orifice d'entrée 14 débouche radialement dans la chambre hydraulique 16, ce qui permet de diminuer l'encombrement axial du cylindre récepteur 10.

Le volume de la chambre hydraulique 16 est susceptible de varier en fonction de la position du piston 20 dans le corps de cylindre 17, le piston 20 étant susceptible de coulisser axialement entre une première position avancée représentée sur la figure 1 et une deuxième position reculée représentée sur la figure 2.

Le piston 20 qui est représenté dans ces figures est réalisé par emboutissage d'une tôle métallique, par exemple en acier ou en alliage d'aluminium, mais d'autres modes de réalisation, tels que le forgeage ou le moulage, sont envisageables.

Le piston 20 est essentiellement formé d'une paroi transversale 32, dont la face avant 30 délimite la chambre hydraulique 16 et dont une face arrière 34 coopère avec la tige de commande 22, et d'une jupe latérale cylindrique 36 qui assure le guidage du piston 20 dans le corps de cylindre 17.

Le piston 20 étant réalisé par emboutissage, la paroi transversale 32 est formée par un repli de tôle dont la forme est complémentaire de celle de l'extrémité avant 23 de la tige de commande 22. Plus précisément, la paroi transversale 32 comporte une portion centrale sphérique, de même rayon de courbure que l'extrémité 23 de la tige de commande 22, qui est reliée à l'extrémité axiale arrière 54 de la jupe 36 par une portion conique qui autorise un léger débattement angulaire de la tige de commande 22 autour de son extrémité avant 23.

Dans un dispositif de commande hydraulique d'un embrayage, la pression du fluide est susceptible d'atteindre des valeurs de l'ordre de 30 à 40 bars et il est donc nécessaire d'assurer, d'une part, un excellent guidage du piston 20 dans le corps de cylindre 17, pour éviter tout risque d'arc-boutement et de coincement et, d'autre part, d'assurer une étanchéité de très bonne qualité susceptible de résister à de telles pressions.

Dans le but d'améliorer le guidage du piston 20, la jupe annulaire 36 s'étend axialement sur une longueur dont la valeur est comprise entre trois et quatre fois la valeur de son diamètre et comporte ainsi, de part et d'autre de la paroi transversale 32 du piston 20, un tronçon tubulaire avant 38 et un tronçon tubulaire arrière 40.

Le tronçon tubulaire avant 38 de la jupe 36 est destiné à coopérer plus particulièrement avec une surface cylindrique interne 42 de la partie avant 24 du corps de cylindre 17 qui délimite la chambre hydraulique 16.

Le tronçon arrière 40 de la jupe 36 du piston 20 coulisse axialement dans la partie arrière 26 du corps de cylindre 17.

Plus précisément, le tronçon arrière 40 coopère avec un tube arrière de guidage 50 qui, conformément aux enseignements de l'invention, est emboîté axialement dans la partie arrière 26 du corps principal 18 et dont une surface cylindrique interne 52 est de diamètre sensiblement égal au diamètre de la surface cylindrique interne 42 de la partie avant 24 du corps principal 18. Le tube 50 est en matière plastique.

Le tube arrière 50 comporte une surface cylindrique externe 110 lisse et la partie arrière 26 du corps principal 18 comporte une surface cylindrique interne 70 correspondante si bien que le montage du tube 50 dans le corps principal 18 peut se faire par simple emboîtement axial et permet d'obtenir de manière simple une très bonne coaxialité du tube 50 dans par rapport au corps principal 18.

Etant donné la grande longueur axiale des surfaces cylindriques 110, 70 correspondantes du tube 50 et du corps principal 18, et grâce à la précision de leur ajustement permise par l'absence de filetage, il est possible de ne pas prévoir de joint d'étanchéité entre ces deux surfaces tout en garantissant une bonne étanchéité, contrairement à l'art antérieur connu faisant appel à un filetage.

L'extrémité axiale arrière 58 du tube arrière 50 affleure à l'extrémité axiale arrière 60 du corps principal 18 et comporte un collet radial interne 62, qui est réalisé sous la forme d'une pièce indépendante rapportée, et qui permet de limiter vers l'arrière la course axiale du piston 20 dans le corps de cylindre 17.

Par ailleurs, l'extrémité axiale arrière 58 du tube 50 dépasse axialement vers l'arrière au-delà de l'extrémité arrière 60 du corps principal 18 et comporte un collet radial externe 106 qui est agencé en regard de l'extrémité arrière 60 du corps principal 18.

Selon l'invention, le tube arrière 50 est fixé dans le corps principal 50 par soudage ou par collage. Outre une mise en oeuvre simplifiée, une telle fixation permet d'assurer une étanchéité complémentaire entre ces deux éléments.

Le tronçon avant 38 de la jupe annulaire 36 du piston 20 délimite un logement cylindrique qui permet le guidage d'un ressort de compression 64 qui est interposé, dans la chambre hydraulique 16, entre la paroi transversale avant 28 du corps principal 18 et la face avant transversale 30 du piston 20, dans le but de forcer le piston 20 au contact de la tige de commande 22.

De manière similaire, le tronçon arrière tubulaire 40 de la jupe annulaire 36 délimite un logement cylindrique dans lequel est reçue l'extrémité axiale avant de la tige de commande 22.

L'étanchéité de la chambre hydraulique 16 par rapport à l'extérieur est assurée par deux joints d'étanchéité, primaire 66 et secondaire 68, qui sont portés par le corps de cylindre 17 et coopèrent avec la surface cylindrique externe 48 de la jupe annulaire 36 du piston 20. Les joints 66,68 sont décalés axialement l'un par rapport à l'autre.

Dans ce premier exemple de réalisation, le joint d'étanchéité primaire est réalisé sous la forme d'un joint composite 66.

Le joint composite 66 comporte essentiellement une bague interne 88 annulaire en matériau à faible coefficient de frottement tel que le «Teflon», et un anneau externe 90 en matière élastomère et il est destiné à être monté serré dans un logement cylindrique 92 formé dans la paroi transversale 78 qui délimite les parties avant 24 et arrière 26 du corps principal 18.

Le logement cylindrique 92 est d'un diamètre compris entre celui des surfaces cylindriques internes 70, 42 respectivement des parties arrière 26 et avant 24 du corps principal 18, et il débouche dans la partie arrière 26 par un chanfrein 95.

Lorsqu'il est en position montée, le joint composite 66 est en butée axialement vers l'avant contre une face axiale avant 94 du logement 92 et il est serré radialement entre la surface cylindrique latérale du logement 92 et la surface cylindrique externe 48 du piston 20.

L'anneau externe 90 en matière élastomère permet, en se déformant, de bien maîtriser la force de serrage appliquée sur la bague interne 88 tout en rattrapant un éventuel défaut de coaxialité entre le piston 48 et le corps de cylindre 17.

On obtient de la sorte une pression de contact entre la bague interne 88 et le piston 48 qui est homogène sur toute la circonférence du piston 48 et on obtient une excellente étanchéité sans pour autant induire des forces de frottement importantes entre le piston 20 et le corps de cylindre 17.

Il est nécessaire, pour le bon fonctionnement du joint composite 66, que la bague interne 88 et l'anneau externe 90 soient agencés axialement dans le même plan et il est prévu à cet effet une rondelle annulaire d'appui 96 particulière.

La rondelle annulaire d'appui 96 est en appui par la périphérie externe 98 de sa face avant contre la face arrière 100 de la paroi transversale 78 et la périphérie interne de sa face avant possède un bossage central 102 qui permet de serrer le joint composite 66 contre la face axiale avant 94 du logement cylindrique 92.

La rondelle d'appui 96 facilite la mise en place du joint composite 66 et l'usinage du corps de cylindre 17. Cette rondelle est elle-même maintenue axialement contre la paroi transversale 78 par l'extrémité axiale avant 74 du tube arrière de guidage 50 qui est en appui contre sa face arrière 104. Le bossage central 102 de la face avant de la rondelle d'appui 96 est relié à la périphérie externe 98 par un profil correspondant au chanfrein 95, ce qui permet d'obtenir, par leur coopération, un très bon centrage de la rondelle d'appui 96 dans le corps principal 18.

Dans l'exemple de réalisation de l'invention qui est représenté sur les figures, le joint secondaire 68 est agencé dans un logement cylindrique 76 qui est formé dans la surface cylindrique interne 52 du tube arrière 50 et qui débouche dans l'extrémité avant 74 de ce tube 50, et le joint secondaire 68 est réalisé sous la forme d'une coupelle à lèvres et est en élastomère.

Toutefois, le joint secondaire 68 pourrait aussi être réalisé sous la forme d'un joint composite.

En variante, on peut également prévoir que les deux joints d'étanchéité primaire 66 et secondaire 68 soient agencés dans des logements cylindriques formés à l'extrémité avant du tube arrière de guidage 50.

Selon un aspect particulièrement remarquable de l'invention, le montage d'un cylindre récepteur 10, tel que celui représenté sur les figures, est réalisé par séries d'opérations d'emboîtement axial effectuées successivement dans la même direction, ce qui est particulièrement intéressant en vue de l'automatisation du montage.

Dans ce cas, le joint secondaire 68 et le piston 20 sont agencés successivement dans le tube 50 puis la rondelle d'appui particulière 96 et le joint composite sont introduits autour du piston 20 en appui contre l'extrémité axiale avant 74 du tube arrière 50.

Le corps principal 18 est alors emboîté axialement autour de ces éléments prémontés, sans qu'il soit nécessaire de le faire tourner autour de son axe.

Lorsque le joint composite 66 arrive au contact du chanfrein 95 de son logement cylindrique 92, il est forcé axialement à l'intérieur du logement 92 par le bossage périphérique interne 102 de la rondelle d'appui 96 jusqu'au fond du logement 92.

Le chanfrein 95 permet notamment de faciliter l'introduction du joint 66 dans le logement 92, tandis que la pièce rondelle d'appui 98 facilite la mise en place des joints 66, 68.

Une telle conception d'un cylindre récepteur 10 permet donc de réaliser une étanchéité particulièrement fiable et performante de la chambre d'étanchéité 16 tout en favorisant la facilité de montage du cylindre 10.

L'invention a été ci-dessus décrite pour un cylindre récepteur, mais on pourra transposer aisément les enseignements de l'invention pour réaliser un cylindre émetteur de structure similaire.

Ainsi qu'on l'aura compris, s'agissant d'une application à un embrayage de véhicule automobile, lorsque le piston 20 est en position avancée l'embrayage est engagé, le diaphragme, que comporte usuellement l'embrayage, repousse via la fourchette de débrayage la tige 22, le ressort 64 étant alors comprimé. La chambre hydraulique 16 est alors dépressurisée. Le ressort 64 exerce alors une précharge permettant d'appliquer constamment la butée de débrayage, au contact du diaphragme.

En pressurisant la chambre 16 on déplace le piston et donc la tige 22, la fourchette de débrayage et la butée de débrayage. Lorsque le piston 20 occupe la position reculée l'embrayage est alors désengagé.

Il est avantageux que le tube arrière soit en matière plastique de façon qu'il se dilate de la même manière que le corps principal 18. En outre le tube arrière 50 ainsi que le corps principal 18 servent au guidage du piston.

Dans ce cas le corps principal et le tube arrière sont avantageusement en matière plastique à faible coefficient de frottement. On appréciera, lorsque le piston est embouti, que l'on réduise l'encombrement axial puisque la tige de commande pénètre à l'intérieur au moins de la spire d'extrémité du ressort 64.

Dans tous les cas le tube arrière 50 s'engage à la manière d'un bouchon dans le corps principal 18.

Bien entendu on peut prévoir un joint torique entre la périphérie interne du corps principal 18 et la périphérie externe du tube arrière, ledit joint étant monté par exemple dans une gorge du corps principal.

Toute fuite est ainsi évitée à ce niveau.

Bien entendu on peut prévoir sur le piston des patins de guidage, en matière à faible coefficient de frottement et la présence du deuxième joint 68 n'est pas obligatoire, ce deuxième joint étant là pour réaliser une étanchéité parfaite en cas de fuite au niveau du premier joint 66.

## Revendications

1. Dispositif de commande hydraulique d'un embrayage de véhicule automobile, du type comportant au moins un cylindre de commande (10) du type dans lequel le cylindre (10) comporte un corps de cylindre (17) sensiblement tubulaire dans lequel coulisse axialement un piston (20) qui délimite, par une face transversale avant (30), une chambre hydraulique (16) cylindrique et qui coopère, par une face arrière (34), avec une tige de piston (22), du type dans lequel un orifice de raccordement (14) d'une canalisation (12) débouche dans la chambre hydraulique (16), du type dans lequel le corps de cylindre (17) est réalisé en deux parties en matériau plastique qui comprennent un corps principal (18) et un tube arrière (50) de guidage qui est rapporté dans une partie arrière (26) du corps principal (18) et qui participe au guidage du piston (22) dans le cylindre (10), dans lequel le tube arrière (50) et le corps principal (18) coopèrent par des surfaces cylindriques complémentaires (70, 110) pour permettre un assemblage par emboîtement axial du tube arrière (50) dans le corps principal (18) caractérisé en ce que le tube arrière (50) et le corps principal (18) sont assemblés par soudage ou par collage.

2. Dispositif selon la revendication 1, caractérisé en ce que le tube arrière (50) est en butée axiale contre une face transversale du corps principal (18).

3. Dispositif selon la revendication 2, caractérisé en ce que l'assemblage du tube arrière (50) dans le corps principal (18) par soudage ou par collage est étanche.

4. Dispositif selon la revendication 3, caractérisé en ce que le tube arrière (50) comporte, à son extrémité axiale arrière (58), un collet radial externe (106) dont une face transversale avant s'étend en regard d'une face transversale de l'extrémité axiale arrière (60) du corps principal (18).

5. Dispositif selon la revendication 4, caractérisé en ce que le collage ou le soudage est effectué au moins en partie entre les faces en regard du collet radial (106) du tube arrière (50) et de l'extrémité axiale arrière (60) du corps principal (18).

6. Dispositif selon l'une quelconque des revendications 1 à 5, caractérisé en ce que le collage ou le soudage est effectué au moins en partie entre les deux surfaces cylindriques complémentaires (70, 110) du tube arrière (50) et du corps principal (18).

7. Dispositif selon l'une quelconque des revendications précédentes, caractérisé en ce que le tube arrière (50) porte au moins un joint annulaire (68) qui coopère avec le piston (20) pour assurer l'étanchéité de la chambre hydraulique (16).

8. Dispositif selon l'une quelconque des revendications précédentes, caractérisé en ce que le corps de cylindre (17) est réalisé en matière plastique et en ce que le piston (20) est réalisé en métal.

## Patentansprüche

1. Hydraulische Betätigungsvorrichtung einer Kraftfahrzeugkupplung, die wenigstens einen Betätigungszylinder (10) enthält, wobei der Zylinder (10) einen in etwa rohrförmigen Zylinderkörper (17) umfaßt, in dem ein Kolben (20) axial gleitend verschiebbar gelagert ist, der über eine vordere Querfläche (30) eine zylindrische Hydraulikkammer (16) begrenzt und der über eine rückseitige Fläche (34) mit einer Kolbenstange (22) zusammenwirkt, wobei eine Anschlußöffnung (14) für einen Kanal (12) in der Hydraulikkammer (16) mündet, wobei der Zylinderkörper (17) aus zwei Teilen aus Kunststoff ausgeführt ist, die einen Hauptkörper (18) und ein hinteres Führungsrohr (50) umfassen, das in einem hinteren Teil (26) des Hauptkörpers (18) angefügt ist und das an der Führung des Kolbens (20) im Zylinder (10) mitwirkt, und wobei das hintere Rohr (50) und der Hauptkörper (18) durch formschlüssige zylindrische Flächen (70, 110) zusammenwirken, um eine Verbindung durch axiale Einpassung des hinteren Rohrs (50) im Hauptkörper (18) zu ermöglichen, **dadurch gekennzeichnet,** daß das hintere Rohr (50) und der Hauptkörper (18) durch Schweißen oder durch Verkleben verbunden sind.

2. Vorrichtung nach Anspruch 1, **dadurch gekennzeichnet,** daß das hintere Rohr (50) an einer Querfläche des Hauptkörpers (18) axial zum Anschlag kommt.

3. Vorrichtung nach Anspruch 2, **dadurch gekennzeichnet,** daß die Verbindung des hinteren Rohrs (50) im Hauptkörper (18) durch Schweißen oder durch Verkleben dicht ausgeführt ist.

4. Vorrichtung nach Anspruch 3, **dadurch gekennzeichnet,** daß das hintere Rohr (50) an seinem hinteren axialen Ende (58) einen äußeren radialen Bund (106) umfaßt, dessen vordere Querfläche sich gegenüber einer Querfläche des hinteren axialen Endes (60) des Hauptkörpers (18) erstreckt.

5. Vorrichtung nach Anspruch 4, **dadurch gekennzeichnet,** daß das Verkleben oder das Schweißen wenigstens teilweise zwischen den gegenüberliegenden Flächen des radialen Bunds (106) des hinteren Rohrs (50) und dem hinteren axialen Ende (60) des Hauptkörpers (18) erfolgt.

6. Vorrichtung nach einem der Ansprüche 1 bis 5, **dadurch gekennzeichnet,** daß das Verkleben oder das Schweißen wenigstens teilweise zwischen den zwei formschlüssigen zylindrischen Flächen (70, 110) des hinteren Rohrs (50) und des Hauptkörpers (18) erfolgt.

7. Vorrichtung nach einem der vorangehenden Ansprüche, **dadurch gekennzeichnet,** daß das hintere Rohr (50) wenigstens eine Ringdichtung (68) trägt, die mit dem Kolben (50) zusammenwirkt, um die Abdichtung der Hydraulikkammer (16) sicherzustellen.

8. Vorrichtung nach einem der vorangehenden Ansprüche, **dadurch gekennzeichnet,** daß der Zylinderkörper (17) aus Kunststoff ausgeführt ist und daß der Kolben (20) aus Metall ausgeführt ist.

## Claims

1. Apparatus for the hydraulic control of a motor vehicle clutch, of the type including at least one control cylinder (10), of the type in which the cylinder (10) comprises a substantially tubular cylinder body (17) in which there slides axially a piston (20) which, by a front transverse face (30), delimits a cylindrical hydraulic chamber (16), the piston being in cooperation through a rear face (34) with a piston rod (22), of the type in which a port (14) for connection with a duct (12) is open into the hydraulic chamber (16), of the type in which the cylinder body (17) is made in two parts of plastics material, which consist of a main body (18) and a rear guide tube (50) which is attached in a rear portion (26) of the main body (18), and which participates in the guiding of the piston (22) in the cylinder (10), wherein the rear tube (50) and the main body (18) are in cooperation through complementary cylindrical surfaces (70, 110) so as to permit assembly by axial telescoping of the rear tube (50) in the main body (18), characterised in that the rear tube (50) and the main body (18) are assembled together by welding or adhesive bonding.

2. Apparatus according to Claim 1, characterised in that the rear tube (50) is in axial abutment against a transverse face of the main body (18).

3. Apparatus according to Claim 2, characterised in that the welded or adhesively bonded assembly that consists of the rear tube (50) in the main body (18) is sealed.

4. Apparatus according to Claim 3, characterised in that the rear tube (50) includes, at its rear axial end (58), an external radial collar portion (106) having a front transverse face which lies facing a transverse rear axial end face (60) of the main body (18).

5. Apparatus according to Claim 4, characterised in that the adhesive bonding or welding operation is carried out at least partly between the facing surfaces of the radial collar portion (106) of the rear tube (50) and of the rear axial end (60) of the main body (18).

6. Apparatus according to any one of Claims 1 to 5, characterised in that the adhesive bonding or welding operation is carried out at least partly between the two complementary cylindrical surfaces (70, 110) of the rear tube (50) and main body (18).

7. Apparatus according to any one of the preceding Claims, characterised in that the rear tube (50) carries at least one annular seal (68) which is in cooperation with the piston (20) so as to seal the hydraulic chamber (16).

8. Apparatus according to any one of the preceding Claims, characterised in that the cylinder body (17) is made of plastics material, and in that the piston (20) is made of metal.
